# FASCICULE DE BREVET EUROPEEN

(11) **EP 1 119 706 B1**
(45) Date de publication et mention de la délivrance du brevet: **23.03.2005**
(21) Numéro de dépôt: 00956618.3
(22) Date de dépôt: 04.08.2000
(51) Int. Cl.: F02N 11/04, F02N 11/08

(54) **SYSTEME, NOTAMMENT POUR VEHICULE AUTOMOBILE APTE A ASSURER LE DEMARRAGE D'UN MOTEUR THERMIQUE ET LA MISE EN CHARGE D'UN CIRCUIT ELECTRIQUE**
VERFAHREN, INSBESONDERE FÜR KRAFTFAHRZEUG, ZUR SICHERUNG DES ANLASSENS EINER BRENNKRAFTMASCHINE UND DER VERSORGUNG EINER ELEKTRISCHEN SCHALTUNG
SYSTEM, IN PARTICULAR FOR MOTOR VEHICLE FOR STARTING A HEAT ENGINE AND FOR CHARGING AN ELECTRIC CIRCUIT

(30) Priorité: 09.08.1999 FR 9910316
(43) Date de publication de la demande: 01.08.2001
(73) Titulaire: VALEO EQUIPEMENTS ELECTRIQUES MOTEUR, 94017 Creteil (FR)
(72) Inventeur: RICHARD, Daniel, F-94440 Marolles en Brie (FR)
(86) Numéro de dépôt international: PCT/FR2000/002245
(87) Numéro de publication internationale: WO 2001/011231

(56) Documents cités:
- EP-A- 0 391 386
- FR-A- 2 526 087
- FR-A- 2 745 444

## Description

La présente invention est relative aux systèmes, notamment pour véhicule automobile, qui assurent d'une part le démarrage d'un moteur thermique et d'autre part la mise en charge d'un circuit électrique.

Elle concerne également la commande d'un tel système.

Habituellement, sur les véhicules automobiles, le lancement du moteur thermique est réalisé par un démarreur, tandis que la charge de la batterie et l'alimentation des consommateurs sont assurées par un alternateur.

Il a déjà été proposé de réaliser ces deux fonctions au moyen d'un alternateur utilisé à la fois comme générateur et comme moteur électrique. Une telle machine électrique qui réalise à la fois les deux fonctions est couramment désignée sous le nom d'alterno-démarreur.

Pour une présentation d'une telle machine, on pourra avantageusement se référer au brevet FR 2 745 444.

Généralement, cette machine est disposée à la place de l'alternateur. En mode moteur électrique, elle entraîne la poulie du vilebrequin au moyen de la courroie également utilisée en mode générateur. On parle alors d'un alterno-démarreur de type séparé, par opposition à des machines alterno-démarreurs qui entraîneraient directement le moteur thermique au moyen d'un pignon engrenant avec une couronne d'engrenage.

Les alterno-démarreurs de type séparé présentent en fonctionnement en mode moteur certains inconvénients.

Notamment, dans certaines conditions extrêmes, notamment à basse température, le moteur thermique présente un couple résistif important qui peut empêcher un entraînement satisfaisant par la courroie.

Egalement, les alterno-démarreurs séparés ne permettent pas des démarrages rapides dans tous les cas. Les temps de démarrage peuvent être relativement longs, notamment si le moteur thermique connaît des problèmes d'injection ou encore du fait du glissement de la courroie, etc..

Or, il est souhaitable que le démarrage d'un véhicule puisse se réaliser en des temps relativement courts, en particulier lorsque le calculateur de bord du véhicule met en oeuvre pour le moteur thermique un fonctionnement à coupure et redémarrage automatiques du moteur thermique lors des arrêts du véhicule (fonctionnement de type « stop & go » selon la terminologie anglo-saxonne classiquement utilisée par l'homme du métier).

On a proposé dans le document EP-A- 1 046 811, publié le 25/10/200 et conforme au préambule des revendications 1 et 6, un système de démarrage et de charge et une commande qui permettent de pallier ces inconvénients.

Plus particulièrement, ce document concerne un système, notamment pour véhicule automobile, apte à assurer d'une part le démarrage d'un moteur thermique et d'autre part la mise en charge d'un circuit électrique, comportant une machine électrique principale apte à fonctionner d'une part comme générateur et d'autre part comme un moteur électrique, ladite machine électrique entraînant le moteur thermique au moyen d'une courroie lorsqu'elle fonctionne en mode moteur électrique, le système comportant en outre des moyens de gestion qui commandent la machine électrique principale.

Ledit système est tel qu'il comporte un démarreur complémentaire du moteur thermique, ainsi que des moyens de détection pour détecter au moins une condition de déclenchement de l'activation dudit démarreur complémentaire et les moyens de gestion commandent selon une séquence particulière la machine électrique principale et le démarreur lorsque ladite condition est détectée par lesdits moyens de détection.

Ainsi, le système comporte des moyens de démarrage complémentaires (le démarreur), qui lorsqu'une condition nécessitant leur activation est détectée, complète la machine électrique principale, selon un fonctionnement synchronisé avec celui de ladite machine.

Il peut être souhaitable de réduire encore le temps de démarrage du moteur thermique.
Selon l'invention le système du type précité est caractérisé les moyens de détection comportent des moyens pour détecter une absence de démarrage à l'issue d'un temps donné pendant lequel la machine électrique principale fonctionne en mode moteur électrique.

Un tel système est en outre avantageusement complété par les différentes caractéristiques suivantes prises seules ou selon toutes leurs combinaisons techniquement possibles :
- les moyens de gestion comportent des moyens pour arrêter l'alimentation de la machine électrique principale puis alimenter le démarreur complémentaire lorsque le moteur thermique n'a pas démarré à l'issue du temps donné
- lesdits moyens de détection comportent au moins un capteur de température, ainsi que des moyens pour comparer une température mesurée par ledit capteur à un seuil inférieur particulier.
- les moyens de gestion comportent des moyens pour, lorsqu'une condition de l'activation du démarreur complémentaire est détectée, actionner le démarreur complémentaire de façon à ce que son pignon engrène sur une couronne complémentaire pour entraîner le moteur thermique, puis pour commander la machine électrique principale en mode moteur électrique, lorsque l'engrènement du pignon du démarreur est assuré et pour couper le démarreur et commander la machine électrique principale en mode générateur lorsqu'il est détecté que le moteur thermique est lancé.
- les moyens de gestion comportent des moyens pour couper le fonctionnement en mode moteur électrique de la machine électrique principale, lorsqu'une condition de l'activation du démarreur complémentaire est détectée.

L'invention concerne également un procédé pour la commande d'un système, notamment pour véhicule automobile, apte à assurer d'une part le démarrage d'un moteur thermique et d'autre part la mise en charge d'un circuit électrique, comportant une machine électrique principale apte à fonctionner d'une part comme générateur et d'autre part comme un moteur électrique, ladite machine électrique entraînant le moteur thermique au moyen d'une courroie lorsqu'elle fonctionne en mode moteur électrique, ledit système comportant un démarreur complémentaire du moteur thermique dans lequel on détecte au moins une condition de déclenchement de l'activation dudit démarreur complémentaire et on commande selon une séquence particulière la machine électrique principale et le démarreur lorsque ladite condition est détectée.

Ce procédé est caractérisé en ce que pour détecter une condition de déclenchement, on détecte une absence de démarrage à l'issue d'un temps donné pendant lequel la machine électrique principale fonctionne en mode moteur.

Un tel procédé est avantageusement complété par les différentes. caractéristiques suivantes prises seules ou selon toutes leurs combinaisons techniquement possibles :
- on arrête l'alimentation de la machine électrique principale, puis on alimente le démarreur complémentaire lorsque le moteur thermique n'a pas démarré à l'issue du temps donné.
- pour détecter une condition de déclenchement, on mesure au moins une température et on compare une température ainsi mesurée à un seuil inférieur particulier.
- lorsqu'une condition de l'activation du démarreur complémentaire est détectée, on actionne le démarreur complémentaire de façon à ce que son pignon engrène sur une couronne complémentaire pour entraîner le moteur thermique, puis on commande la machine électrique principale en mode moteur électrique, lorsque l'engrènement du pignon du démarreur est assuré et on coupe le démarreur et on commande la machine électrique principale en mode générateur lorsqu'il est détecté que le moteur thermique est lancé.
- on coupe le fonctionnement en mode moteur électrique de la machine électrique principale, lorsqu'une condition de l'activation du démarreur complémentaire est détectée.

D'autres caractéristiques et avantages de l'invention ressortiront encore de la description qui suit qui est purement illustrative et non limitative et qui doit être lue en regard des dessins annexés sur lesquels:
- la figure 1 est un schéma illustrant un système conforme à un mode de réalisation possible de l'invention ;
- les figures 2a et 2b sont des graphes temporels sur lesquels on a porté des exemples de séquences d'alimentation possibles pour l'alterno-démarreur et le démarreur complémentaire du système de la figure 1.
- Le système de démarrage et de charge illustré sur la figure 1 est composé :

- d'un alterno-démarreur séparé 1 dont l'arbre se termine par une poulie 2 qui est reliée à une poulie 3 du vilebrequin d'un moteur thermique par l'intermédiaire d'une courroie multi-gorges 4 ; cet alterno-démarreur est monté à la place que prend habituellement l'alternateur ;
- d'un démarreur 5 de complément, dont le pignon est apte à engrener la denture d'une couronne dentée 6 pour entraîner l'arbre du moteur thermique ;
- d'une électronique de pilotage 7.

L'électronique de pilotage 7 est constituée :
- d'un pont de transistors 8 qui constitue un convertisseur de puissance réversible et qui assure le pilotage en mode démarreur et le redressement synchrone en mode alternateur.
- d'un module de gestion 9 qui commande les différents transistors du convertisseur 8 et gère les différentes fonctions suivantes :
   - puissance en modes démarreur et alternateur
   - régulation en mode alternateur
   - transition du mode démarreur au mode alternateur
   - stratégie de fonctionnement pour les conditions extrêmes
   - synchronisation des deux machines.

Ledit module de gestion 9 est à cet effet alimenté par la tension de la batterie, référencée par B, à laquelle il est relié par l'intermédiaire d'un interrupteur 10 de contact du véhicule.

Il reçoit en entrée des informations lui permettant de déterminer la position angulaire du rotor de l'alletmo-démarreur 1, par exemple des informations fournies par des capteurs 11, tels que des capteurs à effet Hall 11.

En sortie, il alimente l'inducteur de l'alterno-démarreur 1, ainsi que le démarreur 5 et génère les tensions injectées sur les grilles (A, B, C ; A', B', C') des transistors du pont 8.

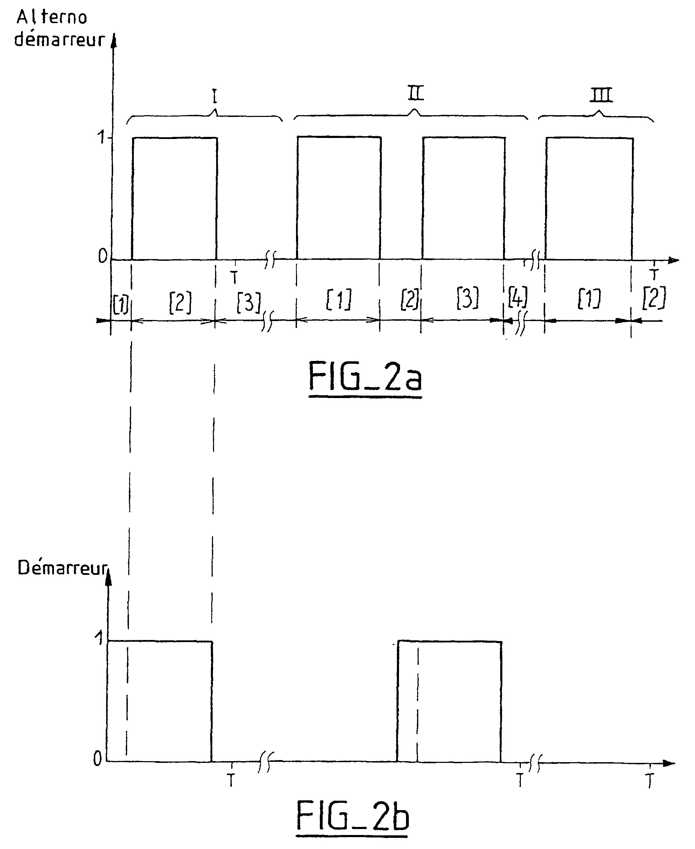

Les figures 2a et 2b illustrent trois séquences d'alimentation de l'alterno-démarreur 1 et du démarreur 5 correspondant à trois cas de fonctionnement différents. Ces trois séquences d'alimentation ont été référencées par I, II et III.

La séquence I correspond à l'alimentation qui est mise en oeuvre lorsqu'il est détecté que le moteur thermique et le système de démarrage se trouvent dans des conditions extrêmes de fonctionnement.

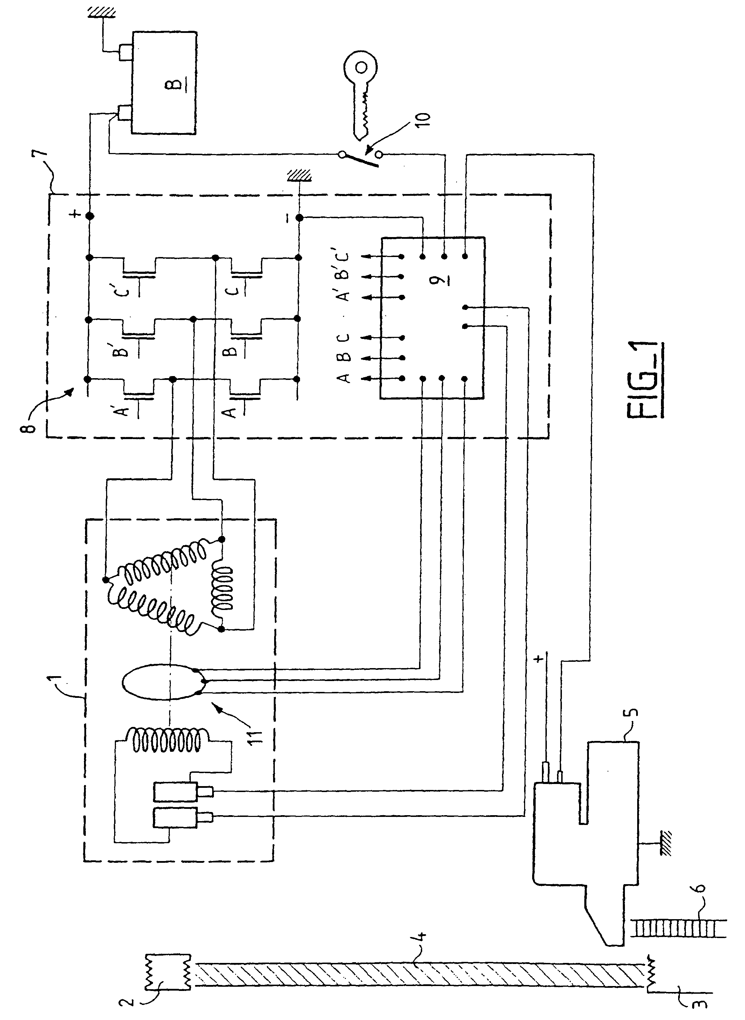

La détection de conditions extrêmes se fait au moyen par exemple d'un ou plusieurs capteurs de température (non représentés sur la figure 1) reliés au module de gestion 9, ce dernier mettant en oeuvre une comparaison de la ou les températures mesurées à un ou plusieurs seuils donnés. Le ou les seuils sont par exemple fonctions des caractéristiques du moteur à combustion interne.

Lorsque ces conditions de fonctionnement extrêmes sont détectées, le module de gestion 9 commande alors l'alterno-démarreur 1 et le démarreur 5 selon la séquence suivante.

Dans une première phase (phase [1] sur la figure 2), le démarreur 5 est alimenté. Son pignon d'entraînement se déplace et engrène sur la couronne dentée 6 de la transmission du moteur thermique.

Dans une deuxième phase, une fois l'engrènement assuré, l'alterno-démarreur est commandé en mode moteur électrique (phase [2]).

Puis, lorsque l'on détecte le lancement du moteur thermique, on commande le désengrènement du pignon d'entraînement du démarreur 5, tandis que l'alterno-démarreur 1 est basculé en mode générateur (phase [3]).

Hors conditions extrêmes de fonctionnement, il peut arriver que le démarrage commandé par l'alterno-démarreur 1 n'intervienne pas assez rapidement.

Pour pallier cette défaillance, le module de gestion 9 commande l'alimentation de l'alterno-démarreur et du démarreur 5 de la façon suivante (séquence II).

Lorsque la fermeture de l'interrupteur 10 commande un démarrage, le module 9 alimente l'inducteur de l'alterno-démarreur 1 de façon à ce que celui-ci fonctionne en mode moteur électrique, tandis que le démarreur 5 n'est pas sollicité (phase [1]).

Si le moteur thermique n'a toujours pas démarré au bout d'un temps T, on arrête l'alimentation de l'alterno-démarreur 1, puis on alimente le démarreur 5 de complément, de façon à ce que le pignon d'engrènement de celui-ci avance, puis engrène avec la couronne dentée 6 (phase d'alimentation [2]).

Lorsque l'engrènement est assuré, on alimente à nouveau l'alterno-démarreur 1 en mode moteur électrique (phase d'alimentation [3]).

Lorsque le lancement du moteur à combustion interne est détecté, on désengrène le pignon d'entraînement du démarreur 5, tandis que l'alterno-démarreur 1 est commandé en générateur (phase [4]).

En conditions normales de fonctionnement, c'est à dire si aucune consigne particulière n'a été détectée (température basse, dépassement de durée de démarrage..), l'alimentation de l'alterno-démarreur 1 et du démarreur 5 est gérée selon la séquence III.

L'alterno-démarreur 1 est initialement commandé en mode moteur électrique (phase [1]) ; lorsque le lancement du moteur à combustion interne est détecté, on passe en mode de générateur (phase [2]). Le démarreur 5 n'est quant à lui pas activé.

## Revendications

1. Système, notamment pour véhicule automobile, apte à assurer d'une part le démarrage d'un moteur thermique et d'autre part la mise en charge d'un circuit électrique, comportant une machine électrique principale apte à fonctionner d'une part comme générateur et d'autre part comme un moteur électrique, ladite machine électrique principale entraînant le moteur thermique au moyen d'une courroie lorsqu'elle fonctionne en mode moteur électrique, le système comportant en outre des moyens de gestion qui commandent la machine électrique principale et un démarreur complémentaire du moteur thermique, ainsi que des moyens de détection pour détecter au moins une condition de déclenchement de l'activation dudit démarreur complémentaire doté d'un pignon, lesdits moyens de gestion commandant selon une séquence particulière la machine électrique principale et le démarreur complémentaire lorsque ladite condition est détectée par lesdits moyens de détection, les moyens de détection comportant des moyens pour détecter une absence de démarrage à l'issue d'un temps donné pendant lequel la machine électrique principale fonctionne en mode moteur électrique.

2. Système selon la revendication 1, **caractérisé en ce que** les moyens de gestion comportent des moyens pour arrêter l'alimentation de la machine électrique principale puis alimenter le démarreur complémentaire lorsque le moteur thermique n'a pas démarré à l'issue du temps donné

3. Système selon la revendication 1 ou 2, **caractérisé en ce que** lesdits moyens de détection comportent au moins un capteur de température, ainsi que des moyens pour comparer une température mesurée par ledit capteur à un seuil inférieur particulier.

4. Système selon l'une es revendications précédentes, **caractérisé en ce que** les moyens de gestion comportent des moyens pour, lorsqu'une condition de l'activation du démarreur complémentaire est détectée, actionner le démarreur complémentaire de façon à ce que son pignon engrène sur une couronne complémentaire pour entraîner le moteur thermique, puis pour commander la machine électrique principale en mode moteur électrique, lorsque l'engrènement du pignon du démarreur complémentaire est assuré et pour couper le démarreur complémentaire et commander la machine électrique principale en mode générateur lorsqu'il est détecté que le moteur thermique est lancé.

5. Système selon la revendication 4, **caractérisé en ce que** les moyens de gestion comportent des moyens pour couper le fonctionnement en mode moteur électrique de la machine électrique principale, lorsqu'une condition de l'activation du démarreur complémentaire est détectée.

6. Procédé pour la commande d'un système, notamment pour véhicule automobile, apte à assurer d'une part le démarrage d'un moteur thermique et d'autre part la mise en charge d'un circuit électrique, comportant une machine électrique principale apte à fonctionner d'une part comme générateur et d'autre part comme un moteur électrique, ladite machine électrique entraînant le moteur thermique au moyen d'une courroie lorsqu'elle fonctionne en mode moteur électrique, selon lequel, ledit système comportant un démarreur complémentaire du moteur thermique, on détecte au moins une condition de déclenchement de l'activation dudit démarreur complémentaire et on commande selon une séquence particulière la machine électrique principale et le démarreur complémentaire lorsque ladite condition est détectée, pour détecter une condition de déclenchement, on détecte une absence de démarrage à l'issue d'un temps donné pendant lequel la machine électrique principale fonctionne en mode moteur électrique.

7. Procédé selon la revendication 6, **caractérisé en ce que** l'on arrête l'alimentation de la machine électrique principale, puis on alimente le démarreur complémentaire lorsque le moteur thermique n'a pas démarré à l'issue du temps donné.

8. Procédé selon la revendication 6 ou 7, **caractérisé en ce que** pour détecter une condition de déclenchement, on mesure au moins une température et on compare une température ainsi mesurée à un seuil inférieur particulier.

9. Procédé selon l'une des revendications précédentes, **caractérisé en ce que**, lorsqu'une condition de l'activation du démarreur complémentaire est détectée, on actionne le démarreur complémentaire de façon à ce que son pignon engrène sur une couronne complémentaire pour entraîner le moteur thermique, puis on commande la machine électrique principale en mode moteur électrique, lorsque l'engrènement du pignon du démarreur est assuré et on coupe le démarreur et on commande la machine électrique principale en mode générateur lorsqu'il est détecté que le moteur thermique est lancé.

10. Procédé selon la revendication 9, **caractérisé en ce qu'**on coupe le fonctionnement en mode moteur électrique de la machine électrique principale, lorsqu'une condition de l'activation du démarreur complémentaire est détectée.

## Patentansprüche

1. System, insbesondere für Kraftfahrzeuge, das in der Lage ist, einerseits das Anlassen einer Brennkraftmaschine und andererseits das Laden einer elektrischen Schaltung herbeizuführen, umfassend eine elektrische Hauptmaschine, die in der Lage ist, einerseits als Generator und andererseits als Elektromotor zu arbeiten, wobei die besagte elektrische Hauptmaschine die Brennkraftmaschine mittels eines Riemens antreibt, wenn sie im Elektromotor-Modus arbeitet, wobei das System außerdem Regelungsmittel umfaßt, welche die elektrische Hauptmaschine und einen zusätzlichen Anlasser der Brennkraftmaschine steuern, sowie Erfassungsmittel, um wenigstens eine Einschaltbedingung für die Aktivierung des besagten zusätzlichen Anlassers zu erfassen, der mit einem Ritzel versehen ist, wobei die besagten Regelungsmittel nach einer besonderen Sequenz die elektrische Hauptmaschine und den zusätzlichen Anlasser steuern, wenn die besagte Bedingung durch die besagten Erfassungsmittel erfaßt wird, wobei die Erfassungsmittel Mittel umfassen, um ein Nichtanlassen nach Ablauf einer gegebenen Zeit zu erfassen, während der die elektrische Hauptmaschine im Elektromotor-Modus arbeitet.

2. System nach Anspruch 1, **dadurch gekennzeichnet, daß** die Regelungsmittel Mittel umfassen, um die Stromversorgung der elektrischen Hauptmaschine abzuschalten und anschließend den zusätzlichen Anlasser zu speisen,. wenn die Brennkraftmaschine nach Ablauf der gegebenen Zeit nicht angelaufen ist.

3. System nach Anspruch 1 oder 2, **dadurch gekennzeichnet, daß** die besagten Erfassungsmittel wenigstens einen Temperaturfühler sowie Mittel umfassen, um eine durch den besagten Temperaturfühler gemessene Temperatur mit einem besonderen unteren Schwellenwert zu vergleichen.

4. System nach einem der vorangehenden Ansprüche, **dadurch gekennzeichnet, daß** die Regelungsmittel Mittel umfassen, um, wenn eine Bedingung für die Aktivierung des zusätzlichen Anlassers erfaßt wird, den zusätzlichen Anlasser zu betätigen, so daß sein Ritzel an einem zusätzlichen Zahnkranz einspurt, um die Brennkraftmaschine anzutreiben, anschließend um die elektrische Hauptmaschine im Elektromotor-Modus zu steuern, wenn das Einspuren des Ritzels des zusätzlichen Anlassers sichergestellt ist, und um den Anlasser abzuschalten und die elektrische Hauptmaschine im Generator-Modus zu steuern, wenn erfaßt wird, daß die Brennkraftmaschine angelaufen ist.

5. System nach Anspruch 4, **dadurch gekennzeichnet, daß** die Regelungsmittel Mittel umfassen, um den Betrieb der elektrischen Hauptmaschine im Elektromotor-Modus abzuschalten, wenn eine Bedingung für die Aktivierung des zusätzlichen Anlassers erfaßt wird.

6. Verfahren zur Steuerung eines Systems, insbesondere für Kraftfahrzeuge, das in der Lage ist, einerseits das Anlassen einer Brennkraftmaschine und andererseits das Laden einer elektrischen Schaltung herbeizuführen, umfassend eine elektrische Hauptmaschine, die in der Lage ist, einerseits als Generator und andererseits als Elektromotor zu arbeiten, wobei die besagte elektrische Maschine die Brennkraftmaschine mittels eines Riemens antreibt, wenn sie im Elektromotor-Modus arbeitet, wobei das besagte System einen zusätzlichen Anlasser für die Brennkraftmaschine umfaßt, wobei wenigstens eine Einschaltbedingung für die Aktivierung des besagten zusätzlichen Anlassers erfaßt wird und wobei nach einer besonderen Sequenz die elektrische Hauptmaschine und der Anlasser gesteuert werden, wenn die besagte Bedingung erfaßt wird, wobei, um eine Einschaltbedingung zu erfassen, ein Nichtanlassen nach Ablauf einer gegebenen Zeit erfaßt wird, während der die elektrische Hauptmaschine im Elektromotor-Modus läuft.

7. Verfahren nach Anspruch 6, **dadurch gekennzeichnet, daß** die Stromversorgung der elektrischen Hauptmaschine abgeschaltet wird, woraufhin der zusätzliche Anlasser gespeist wird, wenn die Brennkraftmaschine nach Ablauf der gegebenen Zeit nicht angelaufen ist.

8. Verfahren nach Anspruch 6 oder 7, **dadurch gekennzeichnet, daß**, um eine Einschaltbedingung zu erfassen, wenigstens eine Temperatur gemessen wird und eine so gemessene Temperatur mit einem besonderen unteren Schwellenwert verglichen wird.

9. Verfahren nach einem der vorangehenden Ansprüche, **dadurch gekennzeichnet, daß**, wenn eine Bedingung für die Aktivierung des zusätzlichen Anlassers erfaßt wird, der zusätzliche Anlasser betätigt wird, so daß sein Ritzel an einem zusätzlichen Zahnkranz einspurt, um die Brennkraftmaschine anzutreiben, woraufhin die elektrische Hauptmaschine im Elektromotor-Modus gesteuert wird, wenn das Einspuren des Ritzels des Anlassers herbeigeführt ist, und der Anlasser abgeschaltet wird und die elektrische Hauptmaschine im Generator-Modus gesteuert wird, wenn erfaßt wird, daß die Brennkraftmaschine gestartet ist.

10. Verfahren nach Anspruch 9, **dadurch gekennzeichnet, daß** der Betrieb der elektrischen Hauptmaschine im Generator-Modus abgeschaltet wird, wenn eine Bedingung für die Aktivierung des zusätzlichen Anlassers erfaßt wird.

## Claims

1. System, in particular for a motor vehicle, able to provide firstly the starting of a thermal engine and secondly the charging on the electrical circuit, comprising a main electrical machine able to function on the one hand as a generator and on the other hand as an electric motor, the said main electrical machine driving the thermal engine by means of a belt when it is functioning in electric motor mode, the system also comprising management means which control the main electrical machine and a complementary starter of the thermal engine, as well as detection means for detecting at least one condition of triggering of the activation of the said complementary starter provided with a pinion, the said management means controlling, according to a particular sequence, the main electrical machine and the complementary starter when the said condition is detected by the said detection means, the detection means comprising means for detecting an absence of starting at the end of a given time during which the main electrical machine is functioning .in electric motor mode.

2. System according to Claim 1, **characterised in that** the management means comprise means for stopping the supply to the main electrical machine and then supplying the complementary starter when the thermal engine has not started at the end of the given time.

3. System according to Claim 1 or 2, **characterised in that** the the said detection means comprise at least one temperature sensor, as well as means for comparing a temperature measured by the said sensor with a particular lower threshold.

4. System according to one of the preceding claims, **characterised in that** the management means comprise means for, when a condition of activation of the complementary starter is detected, actuating the complementary starter so that its pinion meshes on a complementary ring in order to drive the thermal engine, and then for controlling the main electrical machine in electric motor mode, when the meshing of the pinion of the complementary starter is provided, and for cutting off the complementary starter and controlling the main electrical machine in generator mode when it is detected that the thermal engine is started.

5. System according to Claim 4, **characterised in that** the management means comprise means for cutting off the functioning in electric motor mode of the main electrical machine, when a condition of activation of the complementary starter is detected.

6. Method for controlling a system, in particular for a motor vehicle, able. to provide on the one hand the starting of a thermal engine and on the other hand the charging of an electrical circuit, comprising a main electrical machine able to function on the one hand as a generator and on the other hand as an electric motor, the said electrical machine driving the thermal engine by means of a belt when it is functioning in electric motor mode, according to which, the said system comprising a complementary starter of the thermal engine, at least one condition of triggering the activation of the complementary starter is detected and the main electrical machine and the complementary starter are controlled according to.a particular sequence when the said condition is detected, in order to detect a triggering condition, an absence of starting is detected at the end of a given time during which the main electrical machine is functioning in electric motor mode.

7. Method according to Claim 6, **characterised in that** the supply to the main electrical machine is stopped and then the complementary starter is supplied when the thermal engine is not started at the end of the given time.

8. Method according to Claim 6 or 7, **characterised in that**, in order to detect a triggering condition, at least one temperature is measured and a temperature thus measured is compared with a particular lower threshold.

9. Method according to one of the preceding claims, **characterised in that**, when a condition of activation of the complementary starter is detected, the complementary starter is actuated so that its pinion meshes on a complementary belt in order to drive the thermal engine, and then the main electrical, machine is controlled in electric motor mode, when the meshing of the starter pinion is provided, and the starter is cut off and the main electrical machine is controlled in generator mode when it is detected that the thermal engine is started.

10. Method according to Claim 9, **characterised in that** the functioning in electric motor mode of the main electrical machine is cut off when a condition of activation of the complementary starter is detected.
